(19) Europäisches Patentamt / European Patent Office / Office européen des brevets

(11) **EP 4 625 526 A1**

(12) **EUROPEAN PATENT APPLICATION**
published in accordance with Art. 153(4) EPC

(43) Date of publication:
**01.10.2025 Bulletin 2025/40**

(21) Application number: 23894523.2

(22) Date of filing: **17.11.2023**

(51) International Patent Classification (IPC):
*H01M 4/136* (2010.01)    *H01M 4/58* (2010.01)
*H01M 4/62* (2006.01)     *H01M 10/054* (2010.01)
*H01M 10/0562* (2010.01)

(52) Cooperative Patent Classification (CPC):
H01M 4/136; H01M 4/58; H01M 4/62;
H01M 10/054; H01M 10/0562; Y02E 60/10

(86) International application number:
**PCT/JP2023/041428**

(87) International publication number:
**WO 2024/111514 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2022 JP 2022186305**

(71) Applicant: **Nippon Electric Glass Co., Ltd.
Otsu-shi, Shiga 520-8639 (JP)**

(72) Inventors:
• **TANAKA, Ayumu
  Otsu-shi, Shiga 520-8639 (JP)**
• **YAMAUCHI, Hideo
  Otsu-shi, Shiga 520-8639 (JP)**

(74) Representative: **Tetzner, Michael
  Tetzner & Partner mbB
  Patent- und Rechtsanwälte
  Van-Gogh-Strasse 3
  81479 München (DE)**

(54) **POSITIVE ELECTRODE MIXTURE FOR ALL-SOLID-STATE SODIUM ION SECONDARY BATTERY, POSITIVE ELECTRODE FOR ALL-SOLID-STATE SODIUM ION SECONDARY BATTERY, AND ALL-SOLID-STATE SODIUM ION SECONDARY BATTERY**

(57)    Provided is a positive electrode composite material for an all-solid-state sodium-ion secondary battery that can effectively increase the capacity of the secondary battery. A positive electrode composite material for an all-solid-state sodium-ion secondary battery contains a positive-electrode active material and a solid electrolyte containing at least one type of material selected from the group consisting of β"-alumina, β-alumina, and NASICON crystals, and contains crystals having a main peak at 33° to 34° when measured by powder X-ray diffraction.

EP 4 625 526 A1

**Description**

[Technical Field]

The present invention relates to positive electrode composite materials for all-solid-state sodium-ion secondary batteries, positive electrodes for all-solid-state sodium-ion secondary batteries in which the positive electrode composite materials for all-solid-state sodium-ion secondary batteries are used, and all-solid-state sodium-ion secondary batteries in which the positive electrode composite materials for all-solid-state sodium-ion secondary batteries are used.

[Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of burning or explosion. As a solution to this problem, all-solid-state lithium-ion batteries using a solid electrolyte instead of an organic electrolytic solution have been under development. Meanwhile, because, as for lithium, there are concerns about such issues as global rise in raw and processed material costs, all-solid-state sodium-ion secondary batteries have also been under development.

Patent Literature 1 below discloses an all-solid-state sodium-ion secondary battery including a positive electrode layer containing positive-electrode active material crystals represented by a general formula $Na_xM_yP_2O_z$ (where M represents at least one transition metal element selected from among Fe, Cr, Mn, Co and Ni, $1.20 \leq x \leq 2.10$, and $0.95 \leq y \leq 1.60$).

[Citation List]

[Patent Literature]

[PTL 1]
JP-A-2021-097034

[Summary of Invention]

[Technical Problem]

Recently, as secondary batteries for use in power sources for electric vehicles and hybrid vehicles or like power sources, batteries having higher energy density and higher capacity are being demanded for the purpose of long-distance cruising and so on.

An object of the present invention is to provide a positive electrode composite material for an all-solid-state sodium-ion secondary battery, a positive electrode for an all-solid-state sodium-ion secondary battery, and an all-solid-state sodium-ion secondary battery, each of which can effectively increase the capacity of the secondary battery.

[Solution to Problem]

A description will be given of aspects of a positive electrode composite material for an all-solid-state sodium-ion secondary battery, a positive electrode for an all-solid-state sodium-ion secondary battery, and an all-solid-state sodium-ion secondary battery, each of which can solve the above challenge.

A positive electrode composite material for an all-solid-state sodium-ion secondary battery of aspect 1 in the present invention contains a positive-electrode active material and a solid electrolyte containing at least one type of material selected from the group consisting of β"-alumina, β-alumina, and NASICON crystals, the positive electrode composite material containing crystals having a main peak at 33° to 34° when measured by powder X-ray diffraction.

A positive electrode composite material for an all-solid-state sodium-ion secondary battery of aspect 2 is the positive electrode composite material for an all-solid-state sodium-ion secondary battery according to aspect 1, wherein the crystals having a main peak at 33° to 34° when measured by powder X-ray diffraction are preferably at least one of $Na_3Fe_2(PO_4)P_2O_7$ crystals and $Na_4Fe_3(PO_4)_2P_2O_7$ crystals.

A positive electrode composite material for an all-solid-state sodium-ion secondary battery of aspect 3 is the positive electrode composite material for an all-solid-state sodium-ion secondary battery according to aspect 1 or 2, wherein the solid electrolyte is preferably at least one of β"-alumina and β-alumina.

A positive electrode composite material for an all-solid-state sodium-ion secondary battery of aspect 4 is the positive electrode composite material for an all-solid-state sodium-ion secondary battery according to any one of aspects 1 to 3, wherein the positive electrode composite material preferably contains, in terms of % by mass, 30% to 95% the positive-electrode active material, 5% to 70% the solid electrolyte, and 0% to 20% conductive agent.

A positive electrode for an all-solid-state sodium-ion secondary battery of aspect 5 in the present invention contains the positive electrode composite material for an all-solid-state sodium-ion secondary battery according to any one of aspects 1 to 4.

An all-solid-state sodium-ion secondary battery of aspect 6 in the present invention includes the positive electrode for an all-solid-state sodium-ion secondary battery according to aspect 5.

[Advantageous Effects of Invention]

The present invention enables provision of a positive electrode composite material for an all-solid-state sodium-ion secondary battery, a positive electrode for an all-solid-state sodium-ion secondary battery, and an all-solid-state sodium-ion secondary battery, each of which can effectively increase the capacity of the secondary battery.

[Brief Description of Drawings]

[Fig. 1]

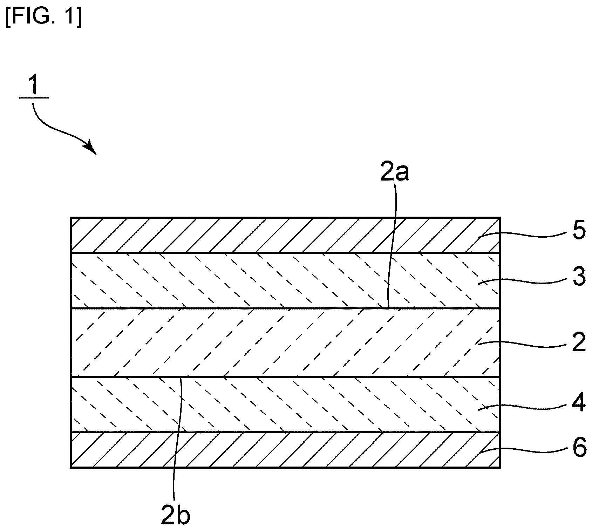

Fig. 1 is a schematic cross-sectional view showing an all-solid-state sodium-ion secondary battery according to an embodiment of the present invention.
[Fig. 2]

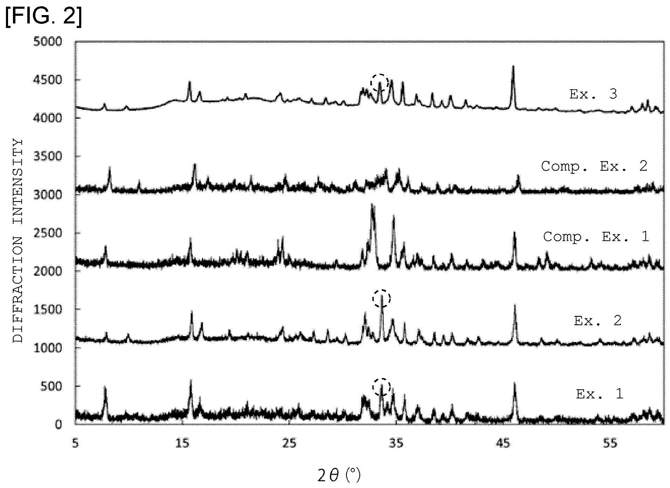

Fig. 2 is a graph showing X-ray diffraction spectra of positive electrode composite materials for all-solid-state sodium-ion secondary batteries produced in Examples 1 to 3 and Comparative Examples 1 to 2.
[Fig. 3]

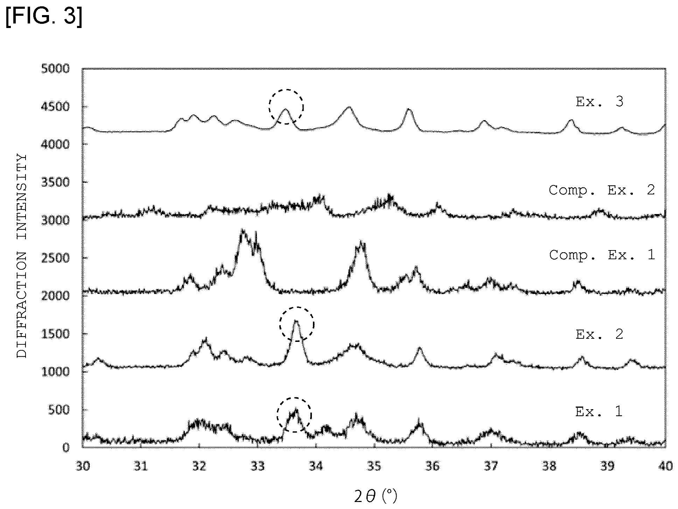

Fig. 3 is a graph showing on a larger scale respective regions in a range of $2\theta = 30°$ to $40°$ in the X-ray diffraction spectra in Fig. 2.

[Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

[Positive Electrode Composite Material for All-Solid-State Sodium-Ion Secondary Battery]

A positive electrode composite material for an all-solid-state sodium-ion secondary battery according to the present invention contains a positive-electrode active material and a solid electrolyte. The solid electrolyte contains at least one type of material selected from the group consisting of β"-alumina, β-alumina, and NASICON crystals. Furthermore, the positive electrode composite material for an all-solid-state sodium-ion secondary battery according to the present invention contains crystals having a main peak at 33° to 34° when measured by powder X-ray diffraction.

Herein, the measurement by powder X-ray diffraction can be performed by the wide-angle X-ray diffraction method. CuKα rays (with a wavelength of 1.541 angstroms) can be used as a source of X-rays. An example of the X-ray diffraction device that can be used is a device having a stock number "SmartLab" manufactured by Rigaku Corporation.

Examples of the crystals having a main peak at 33° to 34° when measured by powder X-ray diffraction include positive-electrode active material crystals, such as $Na_3Fe_2(PO_4)P_2O_7$ crystals and $Na_4Fe_3(PO_4)_2P_2O_7$ crystals.

Since the positive electrode composite material for an all-solid-state sodium-ion secondary battery according to the present invention contains crystals having a main peak at 33° to 34° when measured by powder X-ray diffraction, the capacity of the all-solid-state sodium-ion secondary battery can be effectively increased.

The coefficient of thermal expansion of the positive electrode composite material for an all-solid-state sodium-ion secondary battery according to the present invention is preferably not more than $140 \times 10^{-7}/°C$, more preferably not more than $135 \times 10^{-7}/°C$, even more preferably not more than $130 \times 10^{-7}/°C$, and particularly preferably not more than $125 \times 10^{-7}/°C$. In this case, the cycle characteristics of the all-solid-state sodium-ion secondary battery can be further increased. The lower limit of the coefficient of thermal expansion of the positive electrode composite material for an all-solid-state sodium-ion secondary battery according to the present invention is not particularly limited, but may be, for example, $50 \times 10^{-7}/°C$.

Hereinafter, a description will be given of specific examples of materials constituting a positive electrode for an all-solid-state secondary battery according to the present invention. Hereinafter, "positive electrode composite material for an all-solid-state sodium-ion secondary battery" may be referred to simply as "positive electrode composite material for a secondary battery". Furthermore, "positive electrode for an all-solid-state sodium-ion secondary battery" may be referred to simply as "positive electrode for a secondary battery". Moreover, "all-solid-state sodium-ion secondary battery" may be referred to simply as "secondary battery".

(Positive-Electrode Active Material)

The positive electrode composite material for a secondary battery according to the present invention contains a positive-electrode active material. The positive-electrode active material is preferably a crystallized glass containing either $Na_3Fe_2(PO_4)P_2O_7$ crystals or $Na_4Fe_3(PO_4)_2P_2O_7$ crystals. In addition, the positive-electrode active material may be a crystallized glass containing both of $Na_3Fe_2(PO_4)P_2O_7$ crystals and $Na_4Fe_3(PO_4)_2P_2O_7$ crystals.

Furthermore, the crystallized glass constituting the positive-electrode active material may contain crystals represented by a general formula $Na_{2-x}Fe_{1+x/2}P_2O_7$ (where $0 \leq x \leq 1$). Examples of this type of crystals include $Na_2FeP_2O_7$ and $Na_{3.32}Fe_{2.34}(P_2O_7)_2$.

Herein, a crystallized glass means a glass obtained by heating (firing) a precursor glass containing an amorphous phase to precipitate crystals (crystallize the precursor glass). The entire amorphous phase may transition to a crystalline phase or part of the amorphous phase may remain. Furthermore, a single type of crystals may be precipitated or two or more types of crystals may be precipitated. For example, whether to be a crystallized glass or not can be determined by the peak angles and peak intensities shown by a X-ray diffraction spectrum.

The crystallinity of the crystallized glass constituting the positive-electrode active material is preferably not less than 70%, more preferably not less than 80%, even more preferably not less than 90%, and preferably not more than 99%. In this case, smooth paths for ion diffusion in the positive-electrode active material can be easily obtained, which contributes to further increases in battery characteristics.

The crystallinity of the crystallized glass can be determined from a diffraction line profile at $2\theta$ values of $10°$ to $60°$, which is obtained by powder X-ray diffraction (XRD) measurement using CuK$\alpha$ rays. Specifically, the background is subtracted from a diffraction line profile obtained by powder X-ray diffraction (XRD) measurement to obtain a total scattering curve, a broad diffraction curve (amorphous halo) at $10°$ to $45°$ is peak-separated from the total scattering curve and integrated in intensity, the obtained integrated intensity of the halo is represented as Ia, each of crystalline diffraction lines detected at $10°$ to $60°$ is peak-separated from the total scattering curve and integrated in intensity, and the sum of the obtained integrated intensities of the crystalline diffraction lines is represented as Ic. In this case, the crystallinity Xc can be determined from the following equation.

```
Xc = [Ic/(Ic+Ia)] × 100 (%)
```

The amount of crystals of at least either one of $Na_3Fe_2(PO_4)P_2O_7$ crystals and $Na_4Fe_3(PO_4)_2P_2O_7$ crystals is preferably not less than 90% by mass, more preferably not less than 92% by mass, even more preferably not less than 95% by mass, preferably not more than 100% by mass, and more preferably not more than 99% by mass. In this case, the positive-electrode active material contains $Na_3Fe_2(PO_4)P_2O_7$ crystals or $Na_4Fe_3(PO_4)_2P_2O_7$ crystals, in which sodium ions are more diffusible than $Na_2FeP_2O_7$ crystals, it can more surely obtain a discharge capacity even under rapid discharge conditions where polarization is likely to occur.

In the present invention, the content of the positive-electrode active material in the positive electrode composite material for a secondary battery is not particularly limited, but, in terms of % by mass, preferably not less than 30%, more preferably not less than 44.5%, even more preferably not less than 50%, preferably not more than 95%, more preferably not more than 92%, and even more preferably not more than 90%. When the content of the positive-electrode active material in the positive electrode composite material for a secondary battery is within the above range, the capacity of the secondary battery can be more effectively increased.

(Solid Electrolyte)

The positive electrode composite material for a secondary battery according to the present invention contains a solid electrolyte. The solid electrolyte is a component that plays a role in conducting ions in a positive electrode for a secondary battery. When the positive electrode composite material for a secondary battery contains a solid electrolyte, the ionic conductivity of the positive electrode for a secondary battery can be increased without an electrolytic solution.

Examples of the solid electrolyte include beta-alumina and NASICON crystals, both of which have excellent sodium-ion conductivity. Beta-alumina includes two types of crystals: $\beta$-alumina (theoretical composition formula: $Na_2O \cdot 11Al_2O_3$) and $\beta"$-alumina (theoretical composition formula: $Na_2O \cdot 5.3Al_2O_3$). $\beta"$-alumina is a metastable material

into which, generally, $Li_2O$ or $MgO$ is added as a stabilizing agent. β"-alumina has a higher sodium-ion conductivity than β-alumina. Therefore, β"-alumina alone or a mixture of β"-alumina and β-alumina is preferably used and $Li_2O$-stabilized β"-alumina $(Na_{1.7}Li_{0.3}Al_{10.7}O_{17})$ or $MgO$-stabilized β"-alumina $((Al_{10.32}Mg_{0.68}O_{16})(Na_{1.68}O))$ is more preferably used.

Examples of the NASICON crystal include $Na_3Zr_2Si_2PO_{12}$, $Na_{3.2}Zr_{1.3}Si_{2.2}P_{0.8}O_{10.5}$, $Na_3Zr_{1.6}Ti_{0.4}Si_2PO_{12}$, $Na_3Hf_2Si_2PO_{12}$, $Na_{3.4}Zr_{0.9}Hf_{1.4}Al_{0.6}Si_{1.2}P_{1.8}O_{12}$, $Na_3Zr_{1.7}Nb_{0.24}Si_2PO_{12}$, $Na_{3.6}Ti_{0.2}Y_{0.8}Si_{2.8}O_9$, $Na_3Zr_{1.88}Y_{0.12}Si_2PO_{12}$, $Na_{3.12}Zr_{1.88}Y_{0.12}Si_2PO_{12}$, $Na_{3.05}Zr_2Si_{2.06}P_{0.95}O_{12}$, $Na_{3.4}Zr_2Si_{2.4}P_{0.6}O_{12}$, $Na_{3.6}Zr_{0.13}Yb_{1.67}Si_{0.11}P_{2.9}O_{12}$, and $Na_5Y$-$Si_4O_{12}$. $Na_{3.12}Zr_{1.88}Y_{0.12}Si_2PO_{12}$ or $Na_{3.05}Zr_2Si_{2.06}P_{0.95}O_{12}$ is preferred as NASICON crystals because they have excellent sodium-ion conductivity.

In the present invention, the content of the solid electrolyte in the positive electrode composite material for a secondary battery is, in terms of % by mass, preferably not less than 5%, more preferably not less than 7%, even more preferably not less than 10%, preferably not more than 70%, more preferably not more than 55%, and even more preferably not more than 50%. When the content of the solid electrolyte in the positive electrode composite material for a secondary battery is within the above range, the ionic conductivity of the positive electrode for a secondary battery can be further increased and, thus, the battery characteristics of the secondary battery can be more effectively increased.

(Conductive Agent)

The positive electrode composite material for a secondary battery according to the present invention may further contain a conductive agent. An example of the conductive agent that can be used is conductive carbon. Examples of the conductive carbon include acetylene black, carbon black, Ketjenblack, vapor-grown carbon fiber carbon conductive agent (VGCF), and carbon nanotubes. The conductive agent is preferably a carbon-based conductive agent such as those just described.

In the present invention, the content of the conductive agent in the positive electrode composite material for a secondary battery is, in terms of % by mass, preferably not less than 0%, more preferably not less than 0.5%, even more preferably not less than 1%, preferably not more than 20%, more preferably not more than 15%, and even more preferably not more than 10%. When the content of the conductive agent in the positive electrode composite material for a secondary battery is within the above range, the ionic conductivity of the positive electrode for a secondary battery can be further increased while a high electronic conductivity thereof is secured and, thus, the battery characteristics of the secondary battery can be more effectively increased.

(Production Method of Positive Electrode Composite Material for Secondary Battery)

The positive electrode composite material for a secondary battery according to the present invention can be formed, for example, by forming, on one principal surface of a solid electrolyte layer to be described hereinafter, an electrode material layer containing a positive-electrode active material precursor, a solid electrolyte powder, and, as necessary, a conductive agent, and firing the electrode material layer. The electrode material layer can be obtained, for example, by applying a paste containing a positive-electrode active material precursor, a solid electrolyte powder, and, as necessary, a conductive agent and drying the paste. The paste may contain, as necessary, a binder, a plasticizer, a solvent, and/or so on. The electrode material layer may be a powder compact.

The drying temperature of the paste is not particularly limited, but may be, for example, not lower than 40°C and not higher than 120°C. The drying time for the paste is not particularly limited, but may be, for example, not less than 3 minutes and not more than 600 minutes.

The atmosphere during the firing is preferably an inert atmosphere or a reductive atmosphere. The firing temperature (the highest temperature thereof) may be, for example, 400°C to 600°C and the holding time at the temperature may be, for example, one minute to two hours.

From the viewpoint of more surely precipitating either $Na_3Fe_2(PO_4)P_2O_7$ crystals or $Na_4Fe_3(PO_4)_2P_2O_7$ crystals, the firing temperature (the highest temperature thereof) is preferably not lower than 420°C, more preferably not lower than 450°C, preferably not higher than 575°C, and more preferably not higher than 530°C. Furthermore, the holding time at the temperature is preferably not less than 5 minutes, more preferably not less than 10 minutes, preferably not more than one hour, and more preferably not more than 45 minutes.

Moreover, the atmosphere during the firing is preferably a reductive atmosphere.

Positive-Electrode Active Material Precursor;

The positive-electrode active material precursor (positive-electrode active material precursor powder) is preferably made of an amorphous oxide material that generates active material crystals when fired. In the case where the positive-electrode active material precursor powder is made of an amorphous oxide material, the amorphous oxide material when fired not only generates active material crystals, but also can soften and flow to form a dense positive electrode layer. In addition, the positive-electrode active material and the solid electrolyte can be integrated together. Alternatively, in the case where the positive electrode layer contacts the solid electrolyte layer, both the layers can be bonded together. As a result, an ion conduction path is formed better, which is favorable. In the present invention, the term "amorphous oxide material" is not limited to a fully amorphous oxide material and includes those partially containing crystals (for example, those having a crystallinity of 10% or less).

The positive-electrode active material precursor powder preferably contains, in terms of % by mole of the following oxides, 25% to 55% $Na_2O$, 10% to 30% $Fe_2O_3$, and 25% to 55% $P_2O_5$. The reasons why the composition is limited as just described will be described below. In the following description of the respective contents of the components, "%" refers to "% by mole" unless otherwise stated.

$Na_2O$ is a main component of active material crystals which are either $Na_3Fe_2(PO_4)P_2O_7$ crystals or $Na_4Fe_3(PO_4)_2P_2O_7$ crystals. The content of $Na_2O$ is preferably 25% to 55%, more preferably 30% to 50%, and even more preferably 35% to 45%. When the content of $Na_2O$ is within the above range, the capacity of the secondary battery can be further increased.

$Fe_2O_3$ is also a main component of active material crystals which are either $Na_3Fe_2(PO_4)P_2O_7$ crystals or $Na_4Fe_3(PO_4)_2P_2O_7$ crystals. The content of $Fe_2O_3$ is preferably 10% to 30%, more preferably 12% to 28%, and even more preferably 15% to 25%. When the content of $Fe_2O_3$ is not less than the above lower limit, the capacity of the secondary battery can be further increased. On the other hand, when the content of $Fe_2O_3$ is not more than the above upper limit, this can make it less likely that undesirable crystals, such as $Fe_2O$, precipitate.

$P_2O_5$ is also a main component of active material crystals which are either $Na_3Fe_2(PO_4)P_2O_7$ crystals or $Na_4Fe_3(PO_4)_2P_2O_7$ crystals. The content of $P_2O_5$ is preferably 25% to 55%, more preferably 30% to 50%, and even more preferably 35% to 45%. When the content of $P_2O_5$ is within the above range, the capacity of the secondary battery can be further increased.

The positive-electrode active material precursor powder may contain, in addition to the above components, $Cr_2O_3$, $MnO$, $CoO$, $NiO$, $V_2O_5$, $Nb_2O_5$, $MgO$, $Al_2O_3$, $TiO_2$, $ZrO_2$ or $Sc_2O_3$. The total content of these components is preferably 0% to 25% and more preferably 0.2% to 10%.

Aside from the above components, the positive-electrode active material precursor powder may contain $SiO_2$, $B_2O_3$, $GeO_2$, $Ga_2O_3$, $Sb_2O_3$ or $Bi_2O_3$. When containing any of these components, a positive-electrode active material precursor powder having an increased glass formation ability and being more homogeneous is easy to obtain. The total content of these components is preferably 0% to 25% and more preferably 0.2% to 10%. Because these components do not contribute to the battery characteristics, an excessively large content of them leads to a tendency to decrease the capacity of the secondary battery.

The positive-electrode active material precursor powder is preferably made by melting a raw material batch and forming the melt into a shape. This making method is preferred because an amorphous positive-electrode active material precursor powder having excellent homogeneity can be easily obtained. Specifically, the positive-electrode active material precursor powder can be made in the following manner.

First, raw materials are formulated to give a desired composition, thus obtaining a raw material batch. Next, the obtained raw material batch is melted. It is preferable that the melting temperature is appropriately adjusted to make the raw material batch homogeneously melted. For example, the melting temperature is preferably not lower than 800°C and more preferably not lower than 900°C. The upper limit of the melting temperature is not particularly limited, but an excessively high melting temperature leads to energy loss or evaporation of the sodium component and so on. Therefore, the melting temperature is preferably not higher than 1500°C and more preferably not higher than 1400°C.

Next, the obtained melt is formed into a shape. The method for forming the melt into a shape is not particularly limited. For example, the melt may be formed into a film with rapid cooling by pouring the melt between a pair of cooling rolls or may be formed into an ingot by casting the melt into a mold.

Subsequently, the obtained formed body is ground to obtain a positive-electrode active material precursor powder. The average particle diameter of the positive-electrode active material precursor powder is preferably not less than 0.01 $\mu$m and not more than 0.7 $\mu$m, more preferably not less than 0.03 $\mu$m and not more than 0.6 $\mu$m, even more preferably not less than 0.05 $\mu$m and not more than 0.5 $\mu$m, particularly preferably not less than 0.08 $\mu$m and not more than 0.4 $\mu$m, and most preferably not less than 0.1 $\mu$m and not more than 0.3 $\mu$m. In this case, either $Na_3Fe_2(PO_4)P_2O_7$ crystals or $Na_4Fe_3(PO_4)_2P_2O_7$ crystals can be more easily precipitated.

In the present invention, the average particle diameter refers to an average particle diameter ($D_{50}$) measured with a laser diffraction particle size distribution measurement device. In Examples herein, the average particle diameter ($D_{50}$) was measured with a device manufactured by Shimadzu Corporation and having a stock number "SALD-2200" as the laser diffraction particle size distribution measurement device.

Solid Electrolyte Powder;

Powder of the above-described solid electrolyte can be used as the solid electrolyte powder. The average particle diameter of the solid electrolyte powder is preferably not less than 0.05 $\mu$m and not more than 3 $\mu$m, more preferably not less than 0.05 $\mu$m and less than 1.8 $\mu$m, even more preferably not less than 0.05 $\mu$m and not more than 1.5 $\mu$m, particularly preferably not less than 0.1 $\mu$m and not more than 1.2 $\mu$m, and most preferably not less than 0.1 $\mu$m and not more than 0.7 $\mu$m. In this case, either $Na_3Fe_2(PO_4)P_2O_7$ crystals or $Na_4Fe_3(PO_4)_2P_2O_7$ crystals can be more easily precipitated.

If the average particle diameter of the solid electrolyte powder is too small, the solid electrolyte powder not only becomes difficult to uniformly mix together with the positive-electrode active material precursor powder, but also may absorb moisture or become carbonated to decrease the ionic conductivity of the electrode material layer or may promote an excessive reaction with the positive-electrode active material precursor powder. As a result, the internal resistance of the electrode material layer increases and, thus, the voltage characteristics and the charge and discharge capacities tend to decrease. On the other hand, if the average particle diameter of the solid electrolyte powder is too large, this significantly inhibits the softening and flowing of the positive-electrode active material precursor powder and, therefore, the resultant positive electrode for a secondary battery tends to have poor smoothness to decrease the mechanical strength and tends to increase the internal resistance.

Binder;

The binder is a material for binding the component materials (component material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; and polyvinylidene fluoride.

[Positive Electrode for All-Solid-State Sodium-Ion Secondary Battery and All-Solid-State Sodium-Ion Secondary Battery]

Fig. 1 is a schematic cross-sectional view showing an all-solid-state sodium-ion secondary battery according to an embodiment of the present invention. As shown in Fig. 1, an all-solid-state sodium-ion secondary battery 1 includes a solid electrolyte layer 2, a positive electrode layer 3, a negative electrode layer 4, a first current collector layer 5, and a second current collector layer 6.

The solid electrolyte layer 2 has a first principal surface 2a and a second principal surface 2b opposed to each other. The positive electrode layer 3 is provided on the first principal surface 2a of the solid electrolyte layer 2. The positive electrode layer 3 is a positive electrode for an all-solid-state sodium-ion secondary battery. Furthermore, the first current collector layer 5 is provided on a principal surface of the positive electrode layer 3 located on the side thereof opposite to the solid electrolyte layer 2.

The negative electrode layer 4 is provided on the second principal surface 2b of the solid electrolyte layer 2. The second current collector layer 6 is provided on a principal surface of the negative electrode layer 4 located on the side thereof opposite to the solid electrolyte layer 2. The first current collector layer 5 and the second current collector layer 6 may not necessarily be provided.

Hereinafter, a description will be given of the details of individual layers of the all-solid-state sodium-ion secondary battery according to the present invention.

(Positive Electrode Layer)

The positive electrode layer is made of the above-described positive electrode composite material for a secondary battery according to the present invention.

The thickness of the positive electrode layer is preferably not less than 10 $\mu$m, more preferably not less than 30 $\mu$m, even more preferably not less than 50 $\mu$m, particularly preferably not less than 70 $\mu$m, and most preferably not less than 100 $\mu$m. In this case, the capacity of the secondary battery can be more effectively increased. However, if the thickness of the positive electrode layer is too large, not only the resistance to electron conduction becomes high to make it likely that the discharge capacity and the operating voltage decrease, but also the stress due to shrinkage during firing becomes large to make it likely that peeling occurs. Therefore, the thickness of the positive electrode layer is preferably not more than 1000 $\mu$m.

The amount of positive-electrode active material supported in the positive electrode layer is preferably not less than 1 mg/cm$^2$, more preferably not less than 3 mg/cm$^2$, even more preferably not less than 5 mg/cm$^2$, particularly preferably not less than 7 mg/cm$^2$, and most preferably not less than 10 mg/cm$^2$. In this case, the capacity of the secondary battery can be more effectively increased. The upper limit of the amount of positive-electrode active material supported is not particularly limited, but may be, for example, 500 mg/cm$^2$.

(Solid Electrolyte Layer)

The solid electrolyte layer can be made by mixing raw material powders (solid electrolyte powder), forming the mixed raw material powders (solid electrolyte powder) into a shape, and then firing it. For example, the solid electrolyte layer can be made by making a slurry of the raw material powders (solid electrolyte powder), making a green sheet from the slurry, and then firing the green sheet. Alternatively, the solid electrolyte layer may be made by the sol-gel method. Examples of the solid electrolyte powder that can be used are the same as those described in the section of the positive electrode for a secondary battery.

The average particle diameter of the solid electrolyte powder is preferably not less than 0.01 $\mu$m and not more than 3 $\mu$m, more preferably not less than 0.03 $\mu$m and less than 1.8 $\mu$m, even more preferably not less than 0.03 $\mu$m and not more than 1.5 $\mu$m, particularly preferably not less than 0.03 $\mu$m and not more than 1.2 $\mu$m, and most preferably not less than 0.03 $\mu$m and not more than 0.7 $\mu$m. If the average particle diameter of the solid electrolyte powder is too small, the solid electrolyte powder may absorb moisture or become carbonated to decrease the ionic conductivity of the solid electrolyte layer. As a result, the voltage characteristics and the charge and discharge capacities of the secondary battery tend to decrease. On the other hand, if the average particle diameter of the solid electrolyte powder is too large, this tends to increase the internal resistance of the secondary battery.

The thickness of the solid electrolyte layer is preferably not less than 5 $\mu$m and not more than 1000 $\mu$m and more preferably not less than 10 $\mu$m and not more than 200 $\mu$m. If the thickness of the solid electrolyte layer is too small, the mechanical strength decreases and, thus, the solid electrolyte layer is liable to breakage. Therefore, an internal short circuit is likely to develop. If the thickness of the solid electrolyte layer is too large, the distance of sodium-ion conduction accompanying charge and discharge becomes long and the internal resistance therefore becomes high, which makes it likely that the discharge capacity and the operating voltage of the secondary battery decrease. In addition, the energy density per unit volume of the secondary battery is also likely to decrease.

(Negative Electrode Layer)

The type of negative-electrode active material contained in the negative electrode layer is not particularly limited, but, for example, a carbon electrode material, such as hard carbon or soft carbon, can be used as the negative-electrode active material. The preferred carbon electrode material is hard carbon. However, the negative-electrode active material may contain a negative-electrode active material based on an alloy of tin, bismuth, lead or phosphorus or like alloy capable of absorbing and releasing sodium or contain metallic sodium.

The negative electrode layer may further contain a solid electrolyte and/or a conductive agent. The ratio among components in the negative electrode layer may be, for example, in terms of % by mass, 60% to 100% negative-electrode active material, 0% to 35% solid electrolyte, and 0% to 5% conductive agent. Examples of the solid electrolyte and the conductive agent that can be used include those described in the section of the positive electrode for a secondary battery.

The thickness of the negative electrode layer is preferably not less than 0.3 $\mu$m and not more than 500 $\mu$m and more preferably not less than 3 $\mu$m and not more than 300 $\mu$m. If the thickness of the negative electrode layer is too small, the absolute capacity (mAh/g) of the negative electrode tends to decrease. If the thickness of the negative electrode layer is too large, the resistance becomes high and, therefore, the capacity (mAh/g) tends to decrease.

The negative electrode layer can be produced, for example, using a slurry containing a negative-electrode active material precursor powder and, as necessary, a solid electrolyte powder and/or a conductive agent. As necessary, a binder, a plasticizer, a solvent, and/or so on are added to the slurry. The negative electrode layer can be produced by applying the slurry onto one principal surface of the solid electrolyte layer, drying it, and then firing it. Alternatively, the negative electrode layer may be produced by applying the slurry onto a base material made of PET (polyethylene terephthalate) or so on, drying the slurry to make a green sheet, and then firing the green sheet. Still alternatively, the negative electrode layer may be made of metal, in which case the negative electrode layer can be produced by sputtering, vapor evaporation or the like.

(First Current Collector Layer and Second Current Collector Layer)

The material for the first current collector layer and the second current collector layer is not particularly limited, but metallic materials, such as aluminum, titanium, silver, copper, stainless steel or an alloy of any of them, can be used for each of the layers. These metallic materials may be used singly or in combination of two or more of them. The alloy of any of them means an alloy containing at least one of the above metals. The thickness of each of the first current collector layer and the second current collector layer is not particularly limited, but may be not less than 0.01 $\mu$m and not more than 1000 $\mu$m.

The method for forming the first current collector layer and the second current collector layer is not particularly limited and examples include physical vapor deposition methods, such as evaporation coating and sputtering, and chemical vapor deposition methods, such as thermal CVD, MOCVD, and plasma CVD. Other methods for forming the first current collector layer and the second current collector layer include liquid-phase deposition methods, such as plating, the sol-gel method, and spin coating. However, the first current collector layer and the second current collector layer are preferably formed on the positive electrode layer and the negative electrode layer, respectively, by sputtering because excellent adhesion is provided.

Hereinafter, the present invention will be described in more detail with reference to specific examples. The present invention is not at all limited to the following examples and can be embodied in appropriately modified forms without changing the gist of the invention.

(Example 1)

(a) Making of Positive-Electrode Active Material Precursor Powder

Using sodium metaphosphate ($NaPO_3$), iron(II) oxide ($Fe_2O_3$), and orthophosphoric acid ($H_3PO_4$) as raw materials, these powdered raw materials were formulated to give a composition of, in terms of % by mole, 40% $Na_2O$, 20% $Fe_2O_3$, and 40% $P_2O_5$ and melted at 1250°C for 45 minutes in an air atmosphere. Thereafter, the melt was poured between a pair of rotating rollers to form it into shape with rapid cooling, thus obtaining a film-like glass having a thickness of 0.1 mm to 2 mm. The obtained film-like glass was ground in a ball mill and a planetary ball mill to obtain a glass powder (a positive-electrode active material precursor powder) having an average particle diameter ($D_{50}$) of 0.2 $\mu$m. As a result of powder X-ray diffraction (XRD) measurement, the obtained glass powder was confirmed to be amorphous.

(b) Making of Solid Electrolyte Layer and Solid Electrolyte Powder

$Li_2O$-stabilized $\beta$"-alumina (manufactured by Ionotec Ltd., composition formula: $Na_{1.7}Li_{0.3}Al_{10.7}O_{17}$) was processed into a 0.5 mm thick sheet, thus obtaining a solid electrolyte layer. Furthermore, the $Li_2O$-stabilized $\beta$"-alumina in sheet form was ground in a ball mill and a planetary ball mill, thus obtaining a solid electrolyte powder having an average particle diameter ($D_{50}$) of 2.0 $\mu$m.

(c) Making of Positive-Electrode Paste

An amount of 72% by mass of positive-electrode active material precursor powder and 25% by mass of solid electrolyte powder, both of which were obtained as above, and 3% by mass of acetylene black (SUPER C65 manufactured by TIMCAL) as a conductive carbon (a conductive agent) were weighed and these powders were mixed for 30 minutes with an agate pestle in an agate mortar, thus making a positive electrode composite material powder. An amount of 20 parts by mass of polypropylene carbonate (PPC) was added to 100 parts by mass of the positive electrode composite material powder made as above and 30 parts by mass of N-methylpyrrolidone was further added to the mixture. These materials were well stirred with a planetary centrifugal mixer to form them into a slurry, thus producing a positive-electrode paste.

(d) Formation of Positive Electrode Layer

The positive-electrode paste was applied onto one principal surface of the solid electrolyte layer to have an area of 1 $cm^2$ and a thickness of 80 $\mu$m and dried at 70°C for three hours, thus forming a positive-electrode material layer. The formed positive-electrode material layer was fired under conditions of holding at 550°C for 30 minutes in a mixed gas atmosphere of 4% by volume $H_2$ and 96% by volume $N_2$, thus forming a positive electrode composite material (a positive electrode layer) for a secondary battery on the one principal surface of the solid electrolyte layer.

(e) Formation of Current Collector and Assembly of Coin Cell

A 100 nm thick aluminum-deposited film was formed as a current collector on the entire surface of the positive electrode layer. Thereafter, in an argon glove box at a dew point of -60°C or lower, metallic sodium serving as a negative electrode layer was pressure-bonded to the principal surface of the solid electrolyte layer located on the side thereof opposite to the positive electrode layer and the obtained laminate was encapsulated into a CR2032 coin cell, thus producing an all-solid-state sodium-ion secondary battery.

(Examples 2, 3 and Comparative Examples 1, 2)

All-solid-state sodium-ion secondary batteries were produced in the same manner as in Example 1 except that the respective compositions and firing conditions of positive electrode composite materials for secondary batteries were set as described in Table 1 below.

(Example 4)

A positive electrode composite material (a positive electrode layer) for a secondary battery was produced in the same manner as in Example 2 except that NASICON (crystal composition: $Na_3Zr_2Si_2PO_{12}$) was used as the solid electrolyte powder instead of $Li_2O$-stabilized $\beta$"-alumina. An all-solid-state sodium-ion secondary battery was produced otherwise in the same manner as in Example 2. Therefore, $Li_2O$-stabilized $\beta$"-alumina was used as the solid electrolyte layer, as with Example 2.

[Evaluations]

(Powder X-Ray Diffraction Measurement)

The positive electrode composite materials for secondary batteries produced in Examples 1 to 4 and Comparative Examples 1 and 2 were measured by powder X-ray diffraction. CuK$\alpha$ rays (with a wavelength of 1.541 angstroms) were used as a source of X-rays. As an X-ray diffraction device, a device having a stock number "SmartLab" manufactured by Rigaku Corporation was used.
Fig. 2 is a graph showing X-ray diffraction spectra of positive electrode composite materials for all-solid-state sodium-ion secondary batteries produced in Examples 1 to 3 and Comparative Examples 1 to 2. Fig. 3 is a graph showing on a larger scale respective regions in a range of $2\theta = 30°$ to $40°$ in the X-ray diffraction spectra in Fig. 2. In Figs. 2 and 3, the unit of the diffraction intensity is cps.
As is obvious from Figs. 2 and 3, in the positive electrode composite materials for secondary batteries in Examples 1 to 3, a peak was observed in a range of $2\theta = 33.0°$ to $34.0°$ and, therefore, $Na_3Fe_2(PO_4)P_2O_7$ crystals were precipitated. It can be considered that when, as in these cases, the positive-electrode active material precursor and the solid electrolyte were mixed at appropriate amounts, the positive-electrode active material precursor softened and flowed well during firing, an interface between the positive-electrode active material precursor and the solid electrolyte was thus formed at an appropriate amount, and, therefore, crystallization from the positive-electrode active material precursor to $Na_3Fe_2(PO_4)P_2O_7$ was induced. On the other hand, in Comparative Examples 1 and 2, no peak was observed in a range of $2\theta = 33.0°$ to $34.0°$ and, therefore, $Na_3Fe_2(PO_4)P_2O_7$ crystals were not precipitated. As for Comparative Example 1, the reason can be that since a relatively large amount of fine-particle solid electrolyte was added, the amount of interface between the positive-electrode active material precursor and the solid electrolyte became excessive and, therefore, crystallization from the positive-electrode active material precursor to maricite $NaFePO_4$ was induced. As for Comparative Example 2, the reason can be that since the particle sizes of the positive-electrode active material precursor and the solid electrolyte used were large, the positive-electrode active material precursor was difficult to soften and flow during firing and, in addition, the surface areas of the positive-electrode active material precursor and the solid electrolyte were small, which made the amount of interface between the positive-electrode active material precursor and the solid electrolyte small and, as a result, only crystallization from the positive-electrode active material precursor to $Na_2FeP_2O_7$ occurred.
Also in the positive electrode composite material for a secondary battery in Example 4 in which NASICON was used as the solid electrolyte powder constituting part of the positive electrode composite material for a secondary battery, a peak was observed in a range of $2\theta = 33.0°$ to $34.0°$ and, therefore, precipitation of $Na_3Fe_2 (PO_4) P_2O_7$ crystals was confirmed.

(Measurement of Coefficient of Thermal Expansion)

The positive electrode composite materials for secondary batteries produced in Examples 1 to 4 and Comparative Examples 1 to 2 were measured in terms of coefficient of thermal expansion. The measurement of coefficients of thermal expansion was performed by using a pushrod dilatometer (Dilatometer manufactured by NETZSCH) to measure an average coefficient of thermal expansion in a temperature range of 30°C to 300°C.

(Evaluations of Battery Characteristics)

The secondary batteries produced in Examples 1 to 4 and Comparative Examples 1 and 2 were charged and discharged under conditions of 60°C and a C-rate of 0.2 and under conditions of 60°C and a C-rate of 1 and determined in terms of initial discharge capacity (hereinafter, referred to as discharge capacity). The results are shown in Table 1 below. Table 1 also shows peak values of X-ray diffraction spectra (XRD peak positions) in a range of $2\theta = 30°$ to $40°$.

[Table 1]

| | Ex. 1 | Ex. 2 | Ex. 3 | Ex. 4 | Comp. Ex.1 | Comp. Ex.2 |
|---|---|---|---|---|---|---|
| Positive-Electrode Active Material Precursor Powder (% by mass) | 72 | 83 | 80 | 83 | 72 | 72 |
| Solid Electrolyte Powder (% by mass) | 25 | 13 | 16 | 13 | 25 | 25 |
| Conductive Carbon (% by mass) | 3 | 4 | 4 | 4 | 3 | 3 |
| Average Particle Diameter of Positive-Electrode Active Material Precursor Powder (D50, $\mu$m) | 0.2 | 0.2 | 0.2 | 0.2 | 0.2 | 0.8 |
| Average Particle Diameter of Solid Electrolyte Powder (D50, $\mu$m) | 2 | 0.1 | 0.1 | 0.1 | 0.1 | 2 |
| Firing Temperature (°C) | 550 | 525 | 525 | 525 | 550 | 550 |
| Firing Time (min) | 30 | 30 | 30 | 30 | 30 | 30 |
| XRD Peak Position ($2\theta=30°\sim40°$) | 33.7 | 33.6 | 33.5 | 33.4 | 32.7 | 34.1 |
| Coefficient of Thermal Expansion of Positive Electrode Composite Material ($\times10^{-7}$/°C) | 123 | 132 | 129 | 132 | - | - |
| Discharge Capacity (mAh/g) | 0.2C | 56 | 77 | 65 | 38 | 0 | 0 |
| | 1C | 39 | 68 | 48 | 13 | 0 | 0 |

As is obvious from Table 1, it was confirmed that, in Examples 1 to 4 in which a positive electrode composite material for a secondary battery containing crystals having a main peak at 33° to 34° when measured by powder X-ray diffraction was used, the capacity of the secondary battery could be effectively increased. On the other hand, in Comparative Examples 1 to 2 in which a positive electrode composite material for a secondary battery containing no crystals having a main peak at 33° to 34° when measured by powder X-ray diffraction was used, the capacity of the secondary battery was insufficient.

[Reference Signs List]

1       all-solid-state sodium-ion secondary battery
2       solid electrolyte layer
2a, 2b   first and second principal surfaces
3       positive electrode layer
4       negative electrode layer
5, 6     first and second current collector layers

**Claims**

1.  A positive electrode composite material for an all-solid-state sodium-ion secondary battery, the positive electrode composite material containing:

    a positive-electrode active material; and
    a solid electrolyte containing at least one type of material selected from the group consisting of $\beta$"-alumina, $\beta$-alumina, and NASICON crystals,
    the positive electrode composite material containing crystals having a main peak at 33° to 34° when measured by powder X-ray diffraction.

2.  The positive electrode composite material for an all-solid-state sodium-ion secondary battery according to claim 1, wherein the crystals having a main peak at 33° to 34° when measured by powder X-ray diffraction are at least one of $Na_3Fe_2(PO_4)P_2O_7$ crystals and $Na_4Fe_3(PO_4)_2P_2O_7$ crystals.

3. The positive electrode composite material for an all-solid-state sodium-ion secondary battery according to claim 1 or 2, wherein the solid electrolyte is at least one of β"-alumina and β-alumina.

4. The positive electrode composite material for an all-solid-state sodium-ion secondary battery according to claim 1 or 2, the positive electrode composite material containing, in terms of % by mass, 30% to 95% the positive-electrode active material, 5% to 70% the solid electrolyte, and 0% to 20% conductive agent.

5. A positive electrode for an all-solid-state sodium-ion secondary battery, the positive electrode containing the positive electrode composite material for an all-solid-state sodium-ion secondary battery according to claim 1 or 2.

6. An all-solid-state sodium-ion secondary battery comprising the positive electrode for an all-solid-state sodium-ion secondary battery according to claim 5.

[FIG. 1]

[FIG. 2]

[FIG. 3]

## INTERNATIONAL SEARCH REPORT

| International application No. |
|---|
| **PCT/JP2023/041428** |

| A. | CLASSIFICATION OF SUBJECT MATTER |
|---|---|

*H01M 4/136*(2010.01)i; *H01M 4/58*(2010.01)i; *H01M 4/62*(2006.01)i; *H01M 10/054*(2010.01)i; *H01M 10/0562*(2010.01)i
FI:  H01M4/136; H01M4/58; H01M4/62 Z; H01M10/054; H01M10/0562

According to International Patent Classification (IPC) or to both national classification and IPC

| B. | FIELDS SEARCHED |
|---|---|

Minimum documentation searched (classification system followed by classification symbols)

H01M4/136; H01M4/58; H01M4/62; H01M10/054; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111952675 A (SHAANXI UNIVERSITY OF SCIENCE AND TECHNOLOGY) 17 November 2020 (2020-11-17)<br>claims 1, 5, example 1 | 1-6 |
| Y | SENTHILKUMAR, Basker et al. Iron-Based Mixed Phosphate Na4Fe3(PO4)2P2O7 Thin Films for Sodium-Ion Microbatteries. ACS OMEGA. 2020, 5, pp. 7219-7224<br>p. 7223, left column, lines 6-19 | 1-6 |
| Y | JP 2016-042453 A (NIPPON ELECTRIC GLASS CO) 31 March 2016 (2016-03-31)<br>claim 1, paragraphs [0035]-[0039], examples 1-10, table 1 | 2-4 |
| A | CN 113104828 A (CHINA THREE GORGES UNIVERSITY) 13 July 2021 (2021-07-13)<br>entire text, all drawings | 1-6 |
| A | CN 113060714 A (HUBEI WANRUN NEW ENERGY TECHNOLOGY CO., LTD.) 02 July 2021 (2021-07-02)<br>entire text, all drawings | 1-6 |

[✓] Further documents are listed in the continuation of Box C.      [✓] See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2023/041428** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112768673 A (WUHAN UNIVERSITY) 07 May 2021 (2021-05-07)<br>    entire text, all drawings | 1-6 |
| A | CN 111162256 A (SHANGHAI UNIVERSITY OF ELECTRIC POWER) 15 May 2020 (2020-05-15)<br>    entire text, all drawings | 1-6 |
| A | WANG, Ning et al. Electrochemical properties of mixed-phosphates Nax+2Fex +1(PO4)x(P2O7) with different ratios of PO43-/P2O74-. Journal of Alloys and Compounds. 2021, 870, 159382<br>    entire text, all drawings | 1-6 |

Form PCT/ISA/210 (second sheet) (July 2022)

EP 4 625 526 A1

## INTERNATIONAL SEARCH REPORT
### Information on patent family members

International application No.

**PCT/JP2023/041428**

| Patent document cited in search report | | | Publication date (day/month/year) | Patent family member(s) | Publication date (day/month/year) |
|---|---|---|---|---|---|
| CN | 111952675 | A | 17 November 2020 | (Family: none) | |
| JP | 2016-042453 | A | 31 March 2016 | US 2017/0005337 A1 claim 1, paragraphs [0038]-[0043], examples 1-10, table 1 WO 2015/087734 A1 TW 201526365 A | |
| CN | 113104828 | A | 13 July 2021 | (Family: none) | |
| CN | 113060714 | A | 02 July 2021 | (Family: none) | |
| CN | 112768673 | A | 07 May 2021 | (Family: none) | |
| CN | 111162256 | A | 15 May 2020 | (Family: none) | |

Form PCT/ISA/210 (patent family annex) (July 2022)

**EP 4 625 526 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021097034 A